# FASCICULE DE BREVET EUROPEEN

(11) **EP 0 988 613 B1**
(45) Date de publication et mention de la délivrance du brevet: **28.11.2001**
(21) Numéro de dépôt: 98929481.4
(22) Date de dépôt: 04.06.1998
(51) Int. Cl.: G06K 7/00

(54) **PROCEDE DE MESURE AUTOMATIQUE DE L'UNITE DE TEMPS POUR PERIPHERIQUES DE COMMUNICATION DEDIES AUX CARTES A PUCE**
VERFAHREN ZUR AUTOMATISCHEN ZEITEINHEITENMESSUNG FÜR ZU CHIPKARTEN GEHÖRENDE KOMMUNIKATIONSGERÄTE
METHOD FOR AUTOMATICALLY MEASURING ELEMENTARY TIME UNITS FOR COMMUNICATION PERIPHERALS DEDICATED TO SMART CARDS

(30) Priorité: 12.06.1997 FR 9707454
(43) Date de publication de la demande: 29.03.2000
(73) Titulaire: SCM Microsystems GmbH, 13600 La Ciotat (FR)
(72) Inventeur: BOURSIER, Arnaud, F-06000 Nice (FR); GENEVOIS, Christophe, F-06000 Nice (FR)
(74) Mandataire: Hautier, Jean-Louis
(86) Numéro de dépôt international: FR9801129
(87) Numéro de publication internationale: WO9857288

(56) Documents cités:
- EP-A- 0 347 894
- DE-A- 3 012 075
- FR-A- 2 613 101
- US-A- 5 623 522
- PATENT ABSTRACTS OF JAPAN vol. 017, no. 149 (P-1509), 24 mars 1993 & JP 04 319756 A (MATSUSHITA ELECTRON CORP), 10 novembre 1992

## Description

La présente invention concerne un procédé de mesure de l'unité de temps (ETU = Elementary Time Unit) lors d'un dialogue entre un lecteur et une carte à puce, afin de configurer le dispositif de lecture.

L'état de la technique prône jusqu'à présent une technique d'échantillonage du premier octet ou caractère, puis il y a un calibrage par l'intermédiaire d'un logiciel.

Lors de la procédure d'initialisation d'un dialogue entre un lecteur et une carte à puce, le dispositif de lecture doit être configuré pour échantillonner les données transmises en série et de façon asynchrone par la carte (largeur de chaque bit transmis = 1 ETU).

Par défaut, la largeur de chaque bit est de ETU=372 CLK, soit 1/9600 seconde pour une carte cadencée à 3,57 mégahertz (MHz). Cependant, certaines cartes ont une valeur par défaut de 512 CLK.

On connaît du document EP-A-0.347.894 un lecteur de carte à circuits intégrés présentant des moyens de reconnaissance (22) pour déterminer si la carte (23) chargée présente une fréquence identifiable.

Cependant, seul un nombre limité de fréquences peut être identifié selon cette technique.

On connaît par ailleurs du document Patent Abstract of Japan JP.04319756, une interface de communication série apte à reconstituer la fréquence de transmission dans la liaison série.

Selon l'invention, un automate de mesure de l'unité de temps lors de l'initialisation du dialogue permet de fonctionner de manière transparente avec des cartes ayant des ETU par défaut différents.

Les techniques anciennes d'échantillonnage prennent un temps considérable et utilisent pour cela le microprocesseur. L'invention permet d'augmenter la vitesse de prise en compte de l'unité de temps en n'utilisant pas de logiciel mais le matériel informatique classique (hardware).

A cet effet, la présente invention concerne un procédé tel que défini à la revendication 1. Des modes de réalisation préferrés de l'invention sont définis aux revendications 2 et 3.

L'automate peut s'adapter à différentes valeurs de l'unité de temps, telles que ETU = 372 CLK ou ETU = 512 CLK.

Ce procédé dans lequel le premier caractère est constitué du bit de départ (niveau bas pendant une unité de temps) puis d'un bit dit de partage de temps ou TS (niveau haut pendant une unité de temps) est caractérisé en ce qu'après le bit TS, il est possible de reprogrammer ou d'ajuster la valeur de l'unité de temps mesuré.

L'automate permet l'élimination des parasites, c'est-à-dire des valeurs de l'unité de temps trop petites.

La présente invention concerne un procédé de mesure de l'unité de temps qui régie les échanges entre un lecteur et une carte à puce.

Ce procédé permet ainsi de configurer le dispositif de lecture quelle que soit la valeur de l'unité de temps.

Lors de l'initiation du dialogue (ATR : Answer To Reset), le calibrage de l'unité de temps, ou ETU, se fait automatiquement à réception du premier caractère TS qui est défini par la norme.

Quelle que soit la convention (directe ou à l'inverse), ce caractère a pour caractéristique d'être composé d'un bit de départ, dit start-bit.

Ce bit de départ est constitué d'une transition de 1 vers 0, puis d'une stabilisation à 0 durant un ETU, pour enfin retrouver un niveau haut pendant au moins une ETU.

L'automate de communication, qui comporte les moyens permettant la mise en oeuvre du procédé selon l'invention, va donc se calibrer automatiquement par la mesure du temps entre le front descendant, transition de 1 vers 0, du bit de départ et le front montant suivant de 0 vers 1, toujours de ce bit de départ.

Ce temps mesuré en nombre de cycles d'horloge de la carte est égal à l'ETU de la carte. L'horloge fonctionne bien entendu à l'aide d'un système à quartz.

La valeur de l'ETU est ensuite utilisée pour l'échantillonnage du reste des bits constituant le caractère TS.

A l'issue de la réception du TS, il est possible de reprogrammer et d'ajuster la valeur de l'ETU mesurée.

De plus, cet automate est conçu afin d'éliminer les parasites lorsque les valeurs de l'unité de temps sont trop petites.

Cette invention a pour avantage de permettre le dialogue de manière transparente avec des cartes travaillant avec des débits différents ou non standardisés.

Le calibrage automatique consiste donc à définir la valeur d'une demie-unité de temps qui aura été calculée entre le front descendant et le front montant du bit de départ, puis à reporter cette valeur après le front du bit de départ pour définir le milieu du bit suivant.

Une fois ceci réalisé, la position se trouve en plein milieu de la valeur du bit suivant et il suffira ensuite de reporter successivement la valeur d'une unité de temps pour définir la position de chaque bit successif.

Grâce à cette technique, l'automate va pouvoir s'adapter à différentes valeurs de l'unité de temps quelle que soit la configuration utilisée.

Dans les cas les plus communs, la valeur de l'unité de temps peut être de 372 CLK ou de 512 CLK.

Néanmoins, il est toujours possible que d'autres valeurs apparaissent dans les normes futures.

La carte à puce utilisée peut être conforme à la norme ISO 7916-3.

Ce type de carte à puce fonctionne de façon asynchrone, d'où l'intérêt du procédé selon l'invention.

## Revendications

1. Procédé de mesure de l'unité de temps lors d'un dialogue entre un lecteur et une carte à puce et de calibrage automatique d'un automate de communication du lecteur, afin de configurer le dispositif de lecture, ladite unité de temps correspondant à la longueur d'un bit transmis en série par la carte au lecteur, **caractérisé en ce**
**qu'**il consiste :
- à prendre en compte le front descendant du bit de départ transmis par la carte au lecteur,
- à prendre en compte le front ascendant dudit bit de départ, et
- à mesurer le temps entre lesdits fronts descendant et montant, en nombres de cycles de l'horloge de la carte,
- à effectuer le calibrage automatique de l'automate de communication du lecteur à l'aide dudit temps mesuré.

2. Procédé, selon la revendication 1, **caractérisé en ce**
**que** le temps mesuré correspond au niveau bas du bit de départ.

3. Procédé, selon la revendication 1, **caractérisé en ce**
**que** le calibrage automatique consiste :
- à définir la valeur d'une demie unité de temps,
- à reporter cette valeur après le front ascendant du bit de départ pour définir le milieu du bit suivant,
- à reporter successivement la valeur d'une unité de temps pour définir la position de chaque bit successif.

## Patentansprüche

1. Verfahren zur Zeiteinheitenmessung beim Dialog zwischen einem Leser und einer Chipkarte und zur automatischen Kalibrierung eines Kommunikationsautomaten des Lesers zum Zweck der Konfiguration des Lesesystems, wobei die Zeiteinheit der Länge des von der Karte an den Leser seriell übertragenen Bits entspricht, **dadurch gekennzeichnet** :
- die Erfassung der abfallenden Flanke des von der Karte an den Leser übertragenen Startbits,
- die Erfassung der ansteigenden Flanke des gleichen Startbits,
- die Messung der Zeit zwischen der abfallenden und der ansteigenden Flanke, ausgedrückt in Anzahl Zyklen des Taktgebers der Karte und
- die automatische Kalibrierung des Kommunikationsautomaten des Lesegeräts anhand der gemessenen Zeit.

2. Verfahren nach Anspruch 1, **dadurch gekennzeichnet, daß** die gemessene Zeit dem unteren Pegel des Startbits entspricht.

3. Verfahren nach Anspruch 1, **gekennzeichnet dadurch, daß** die automatische Kalibrierung darin besteht,
- den Wert von eineinhalb Zeiteinheiten zu festzulegen,
- diesen Wert nach der aufsteigenden Flanke des Startbits einzufügen, um die Mitte des nachfolgenden Bits festzulegen und
- den Wert einer Zeiteinheit dann fortlaufend einzufügen, um die Position jedes nachfolgenden Bits festzulegen.

## Claims

1. Process for measuring the time unit during a dialogue between a reader and a smart card and for automatic calibration of a communication controller of the reader, in order to configure the reading device, the aforementioned time unit corresponding to the length of a bit transmitted in series by the card to the reader, **characterized in that** it consists in:
- taking into account the descending front of the start bit transmitted by the card to the reader,
- taking into account the ascending front of the aforesaid start bit, and
- measuring the time between the aforementioned descending and ascending fronts, in number of cycles of the card clock,
- carrying out the automatic calibration of a reader communication controller using the aforesaid measured time.

2. Process according to claim 1, **characterized in that** the measured time corresponds to the low level of the start bit.

3. Process according to claim 1, **characterized in that** the automatic calibration consists in:
- defining the value of a half unit of time,
- carrying over this value after the ascending front of the start bit in order to define the middle of the following bit,
- successively carrying over the value of a time unit in order to define the position of each successive bit.
